(19) Europäisches Patentamt
European Patent Office
Office européen des brevets

(11) **EP 1 529 194 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **03732228.6**

(22) Anmeldetag: **12.05.2003**

(51) Int Cl.:
*G01C 3/06* (2006.01)   *G01S 17/32* (2006.01)

(86) Internationale Anmeldenummer:
**PCT/DE2003/001523**

(87) Internationale Veröffentlichungsnummer:
**WO 2004/018968 (04.03.2004 Gazette 2004/10)**

(54) **VERFAHREN UND VORRICHTUNG ZUR OPTISCHEN DISTANZMESSUNG**

METHOD AND DEVICE FOR OPTICALLY MEASURING DISTANCE

PROCEDE ET DISPOSITIF DE MESURE OPTIQUE DE DISTANCE

(84) Benannte Vertragsstaaten:
**CH DE FR GB IT LI**

(30) Priorität: **03.08.2002 DE 10235562**

(43) Veröffentlichungstag der Anmeldung:
**11.05.2005 Patentblatt 2005/19**

(73) Patentinhaber: **ROBERT BOSCH GMBH**
**70442 Stuttgart (DE)**

(72) Erfinder:
• **STIERLE, Joerg**
  **71111 Waldenbuch (DE)**
• **WOLF, Peter**
  **70771 Leinfelden-Echterdingen (DE)**

(56) Entgegenhaltungen:
DE-A- 19 643 287    DE-A- 19 811 550
US-A- 5 455 670    US-A- 5 745 437

EP 1 529 194 B1

## Beschreibung

Die vorliegende Erfindung geht aus von einem Verfahren zur optischen Distanzmessung nach dem Oberbegriff des Anspruchs 1 bzw. von einer Vorrichtung zur Durchführung eines solchen Verfahrens nach dem Oberbegriff des Anspruchs 4.

Stand der Technik

Entfernungsmessgeräte und insbesondere optoelektronische Entfernungsmessgeräte als solche sind seit längerer Zeit bekannt. Diese Geräte senden einen modulierten Meßstrahl, beispielsweise einen Licht- beziehungsweise Laserstrahl aus, der auf ein gewünschtes Zielobjekt, dessen Abstand zum Gerät zu ermitteln ist, ausgerichtet wird. Das von dem angepeilten Zielobjekt reflektierte oder gestreute, rücklaufende Messsignal wird von einem Sensor des Gerätes zumindest teilweise wieder detektiert und zur Ermittelung des gesuchten Abstandes verwendet.

Bei den bekannten Geräten dieser Art unterscheidet man sogenannte Phasenmessverfahren und reine Laufzeitmessverfahren zur Bestimmung eines gesuchten Abstandes zum Zielobjekt. Bei den Laufzeitmessverfahren wird ein Lichtimpuls möglichst kurzer Impulsdauer von dem Messgerät ausgesandt und anschließend dessen Laufzeit zum Zielobjekt und wieder zurück ins Messgerät ermittelt. Mit dem bekannten Wert der Lichtgeschwindigkeit lässt sich aus der Laufzeit die Entfernung des Messgerätes zum Zielobjekt errechnen.

Bei den Phasenmessverfahren hingegen wird die Variation der Phase des Messsignals in Abhängigkeit von der durchlaufenen Strecke zur Bestimmung des Abstandes zwischen dem Messgerät und dem Zielobjekt ausgenutzt. Aus der Größe der dem rücklaufenden Messsignal aufgeprägten Phasenverschiebung im Vergleich zur Phase des ausgesendeten Messsignals lässt sich die vom Messsignal durchlaufene Strecke und somit der Abstand des Messgerätes zum Zielobjekt bestimmen.

Der Anwendungsbereich der Entfernungsmessgeräte umfasst im Allgemeinen Entfernungen im Bereich von einigen wenigen Zentimetern bis zum mehreren hundert Metern. Derartige Messgeräte werden mittlerweile in kompakten Ausführungen kommerziell vertrieben und erlauben dem gewerblichen oder privaten Anwender einen einfachen, beispielsweise auch handgehaltenen Betrieb.

Um eine hohe Messgenauigkeit mit diesen Geräten zu erzielen, ist es bekannt, die verwendete Modulationsfrequenz möglichst groß zu wählen. Da jedoch eine Eindeutigkeit der Phasenmessung nur für einen Phasenwinkel zwischen 0 und 360° gegeben ist, ist es üblich und beispielsweise auch aus der DE 43 03 804 A1 bekannt, eine hohe Modulationsfrequenz des Sendelichtstrahls mit wenigstens einer weiteren, wesentlich geringeren Modulationsfrequenz des Sendelichtsträhls abzuwechseln, um somit einen Messbereich, der über den Phasenwinkelbereich von 0 bis 360° der hohen Modulationsfrequenz hinausgeht, zu erreichen.

Ferner ist es bekannt, zur genaueren Ermittlung einer Phasendifferenz zwischen dem ausgesandten und dem empfangenen Messsignal das zu analysierende Signal auf eine deutlich kleinere Frequenz, beispielsweise durch einen Frequenzmischprozess, zu transformieren. Durch diesen Mischprozess ergibt sich ein niederfrequentes Messsignal, welches weiterhin Träger der Grundinformation, nämlich der Phasenverschiebung zwischen dem ausgesandten und dem empfangenen Signal ist, welches aber aufgrund seiner deutlich reduzierten Frequenz wesentlich einfacher weiterzuverarbeiten und genauer auszuwerten ist.

Um ein "Heruntermischen" der Messfrequenz zu erreichen, ist bekannt, die Sende- bzw. Empfangssignale mit einem Signal zu mischen, dessen Frequenz lediglich soweit von der Messfrequenz verschoben ist, dass ein Mischergebnis im Niederfrequenzbereich liegt. In diesen Niederfrequenzbereich kann dann problemlos durch eine entsprechende Schaltvorrichtung die gewünschte Phase gemessen werden. In vorteilhafter Weise kann für diesen Frequenzmischprozess beispielsweise auch die das rücklaufende Messsignal detektierende Diode genutzt werden.

Aus der DE 37 43 678 A1 ist ein optisches Rückstreumessgerät bekannt, welches einen optischen Sender aufweist, dessen Sendeleistung über ein Oszillator mit einer sich ändernden Frequenz moduliert werden kann. Der Sendestrahl des Rückstreumessgerätes der DE 37 43 678 A1 wird über einen Strahlteiler in den zu untersuchenden Lichtwellenleiter geleitet. Die aus dem Lichtwellenleiter zurück gestreuten Anteile des Sendestrahls werden über den Strahlteiler einem als Foto-Diode ausgebildeten, optischen Empfänger des optischen Rückstreumessgerätes zugeleitet. Zur Ermittlung des Rückstreu-Ortes und der Rückstreuintensität wird im Rückstreumessgerät der DE 37 43 678 A1 ein Mischsignal aus einem der optischen Rückstreuleistung proportionalen Signal und einer die Oszillatorfrequenz aufweisenden Modulationsspannung gebildet. Der Aufwand für den optischen Empfänger wird dabei dadurch verringert, dass die Foto-Diode eine Avalanche-Foto-Diode ist, deren Vorspannung eine mit der Modulationsspannung modulierte Gleichspannung ist. Das so generierte, niederfrequente Mischsignal wird an einer in den Erregerstromkreis der Foto-Diode geschalteten Parallelschaltung aus einem ohmschen Widerstand und einem Kondensator abgegriffen.

Aus der EP 0 932 835 B1 ist eine Vorrichtung zur Kalibrierung von Entfernungsmessgeräten bekannt, die einen Sender aufweist, welcher eine hochfrequent modulierte optische Strahlung emittiert und damit ein Messobjekt beleuchtet. Des Weiteren besteht die Vorrichtung der EP 0 932 835 B1 aus einem Messempfänger, der die vom Messobjekt reflektierte Strahlung detektiert und in ein elektrisches Signal umwandelt. Aus dem Senderstrahlengang des Entfernungsmessgerätes der EP 0 932 835 B1 wird permanent ein Teil der hochfrequent modulierten Senderstrahlung ausgekoppelt und über eine als Kalibrierstrecke dienende, interne Referenzstrecke direkt einem Referenzempfänger, beispielsweise einer PIN-Diode, zugeführt. Diese Diode ist mit einem Frequenzmischer verbunden. Der Frequenzmischer wiederum ist direkt mit einer als Messempfänger für die Messstrahlung eingesetzten Avalanche-Foto-Diode verbunden. In diese Verbindung wird ein hochfrequentes, elektrisches Signal als Mischerfrequenz eingekoppelt. Diese Mischerfrequenz wird über den Frequenzmischer mit dem hochfrequenten Modulationssignal der von dem Referenzempfänger empfangenen Referenzstrahlung gemischt, wodurch ein niederfrequentes Kalibriersignal entsteht. Andererseits wird die Mischerfrequenz mit dem hochfrequenten Modulationssignal der von der Avalanche-Foto-Diode empfangenen Messstrahlung gemischt, wodurch ein niederfrequentes Messsignal entsteht. Die Avalanche-Foto-Diode stellte somit in der Vorrichtung der EP 0 932 835 B1 einen sogenannten Direktmischer dar. Das niederfrequente Kalibrier- und das ebenfalls niederfrequente Messsignal werden anschließend in bekannter Weise der Phasenmessung zugeführt.

Die DE 198 11 550 A1 offenbart einen Laserentfernungsmesser mit einer Schaltungsanordnung zur Erzeugung wenigstens zweier Signale mit unterschiedlicher Frequenz. Es ist in diesem System vorgesehen, dass aus einem Frequenzoszillator (Grundtakt) wenigstens ein Frequenzpaar mit dicht benachbarter Frequenz abgeleitet wird. Dadurch, dass verschiedene Frequenzen aus einem einzigen Frequenzoszillator (Grundtaktoszillator) digital abgeleitet werden, besitzen alle diese Frequenzer dieselbe relative Genauigkeit wie der Grundtaktoszillator. Die Schaltungsanordnung der DE 198 11 550 A1 generiert dabei Oberschwingungen. Nach Schmalbandigem Filtern, zur 1 Beispiel mit einem Oberflächenwellenfilter, entstehen daraus weitere, sehr hohe Frequenzen mit gleicher Stabilität wie der Grundtaktoszillator, wobei Frequenzen über 100 MHz möglich sind. Der Lichtempfänger des Entfernungsmessers der DE 198 11 550 A1 ist als Avalanche-Photodiode ausgebildet und gestattet gleichzeitig das Mischen mehrere Frequenzen.

Aus der US 5,455,670 ist ein elektro-optisches Entfernungsmesssystem mit umindest drei Laserentfernungsmessern bekannt, welches der Überwacht ng der Krümmungsstabilität der Empfangsantenne eines Radioteleskops dient. Die drei baugleichen Entfernungsmesser des Systems besitzen in einer Ausführungsform einen E.mpfänger mit einer Photodetektor Diode, deren Anode auf einem Referenzpotential liegt und deren Kathode mit einem DC-BIAS Abschluss versehen. Das von der Diode empfangende Rücklaufsignal wird mittels eines Hochfrequenz -Verstärkers verstärkt und auf einen Frequenzmischer geben, um das Signal zu Auswertungszwecken in den Niederfrequenzbereich zu transponieren.

Vorteile der Erfindung

Die erfindungsgemäße Vorrichtung zur optischen Distanzmessung gemäß dem Anspruch 4 weist einen Sendeast mit mindestens einem Sender zur Aussendung modulierten Messstrahlung in Richtung auf ein Zielobjekt auf. In vorteilhafter Weise ist dieser Sender in Form einer Laserdiode ausgebildet, sodass durch Modulation der der Laserdiode zugeführten Energieversorgung sich die gewünschte hochfrequente Modulation direkt auf das optische Signal aufprägen lässt. Desweiteren weist die erfindungsgemäße Vorrichtung einem Empfangsast auf, wobei der Messempfänger des Empfangsastes in Form einer direkt mischenden Avalanche-Foto-Diode ausgebildet ist. Diese Foto-Diode wandelt das einfallende optische Signal in ein entsprechendes elektrisches Signal gleicher Frequenz um.

Durch die Modulation der Verstärkung der Foto-Diode und insbesondere aufgrund der Nichtlinearität der den Fotostrom der Diode bestimmenden Verstärkung, weist das elektrische Ausgangssignal der Fotodiode auch ein Signal auf, dessen Frequenz gegeben ist durch die Differenz zwischen der Frequenz der Modulation des einfallenden optischen Messsignals und der Modulationsfrequenz der Verstärkung der Fotodiode. Bei einer solchen Direktmischung des Messsignales wird der an der Kathode der Diode anliegenden DC-Sperrspannung im Bereich von typischerweise 50 V bis 500 V eine frequenzmodulierte Kleinsignalspannung überlagert. Diese modulierende Kleinsignalspannung ist typischerweise sinusförmig, kann jedoch auch andere Frequenzverläufe haben. Aufgrund dieser Modulation ist neben der Sperrspannung damit auch der Verstärkungsfaktor der Diode frequenzabhängig moduliert.

In vorteilhafter Weise ist bei der erfindungsgemäßen Vorrichtung zur optischen Distanzmessung neben der Kathodenvorspannung $U_K$ der Avalanche-Diode ($U_K = U_0 + u_K(t)$) zusätzlich auch eine an der Anode anliegende Spannung $U_A = u_A(t)$ moduliert. Auf diese Weise können damit Gleichtaktstörungen, die in gleicher Weise sowohl im Kathodenpfad als auch im Anodenpfad des Messempfängers auftreten reduziert bzw. ganz vermieden werden. Diese Gleichtaktstörungen werden nicht mehr in voller Stärke mitgemischt, da für das Mischen in der Diode lediglich das Differenzsignal zwischen Kathode und Anode zum Tragen kommt. So ist es beispielsweise möglich, Messwertverfälschungen, die sich durch entsprechende Gleichtaktstörungen einstellen, deutlich zu reduzieren.

Durch die in den abhängigen Ansprüchen aufgeführten Maßnahmen sind vorteilhafte Weiterbildungen der in den unabhängigen Ansprüchen angegebenen Vorrichtung bzw. des beanspruchten entsprechenden Verfahrens möglich.

In vorteilhafter Weise weist die erfindungsgemäße Vorrichtung eine Schaltungsanordnung auf, mit der die als Messempfänger dienende Avalanche-Foto-Diode anodenseitig mit einer zeitabhängigen Anodenspannung $u_A(t)$ beaufschlagt werden kann, die dem invertierten Signal der modulierenden Kathodenspannung $u_K(t)$ entspricht. In der erfindungsgemäßen Vorrichtung wird somit sowohl die Anoden- als auch die Kathodenseite der Avalanche-Foto-Diode mit einer Spannung vom gleichen Betrag aber invertierter Polarität moduliert. Für das Mischen der Frequenz des Messsignals mit der Modulationsspannung der als Frequenzmischer genutzten Diode kommt lediglich das zeitabhängige Differenzsignal $U_D(t)$ zwischen Kathode und Anode der Diode zum Tragen. Für das Differenzsignal $U_D(t)$ ergibt sich somit:

$$U_D(t) = U_A(t) - U_K(t) = u_A(t) - u_K(t) = 2\, u_A(t)$$

Gegenüber einer reinen Kathodenmodulation benötigt man bei dem erfindungsgemäßen Verfahren somit lediglich die halbe Modulationsamplitude, um ein Modulationssignal gewünschter Stärke zu erzeugen. Insbesondere im Bereich hoher Frequenzen ist dies vorteilhaft, da die Treiberleistung zur Erzeugung der Modulationsfrequenzen entsprechend reduziert werden kann. Darüber hinaus reduziert sich zudem auch die unvermeidliche Abstrahlung des Systems auf ¼ des Wertes, der sich bei alleiniger Kathodenmodulation des Messempfängers ergeben würde, da die Abstrahlung für elektrisch kurze Antennen quadratisch mit der Amplitude der Sendeleistung steigt.

In einer vorteilhaften Ausführungsform der erfindungsgemäßen Vorrichtung stellt ein einzelner Modulator neben der modulierenden Kathodenspannung $u_K(t)$ auch die Anodenspannung $u_A(t)$ zur Verfügung. In dieser Ausführungsform ist es mit einfachen Mitteln möglich, die gewünschten Modulationen an der Avalanche-Foto-Diode zu erzeugen.

Die Foto-Diode wandelt das einfallende optische Signal in ein entsprechendes elektrisches Signal gleicher Frequenz um. Durch die Modulation der Verstärkung der Foto-Diode weist das elektrische Ausgangssignal der Fotodiode auch ein Signal auf, dessen Frequenz gegeben ist durch die Differenz zwischen der Frequenz der Modulation des einfallenden optischen Signals und der Modulationsfrequenz für die Verstärkung der Fotodiode. In der erfindungsgemäßen Vorrichtung wird neben der Kathodenvorspannung auch die Anodenvorspannung moduliert. Beim Prozess in der Foto-Diode kommt das Differenz-Signal zwischen der Kathoden- und der Anoden-Spannung zum Tragen.

Weitere Vorteile der erfindungsgemäßen Vorrichtung bzw. des erfindungsgemäßen Verfahrens ergeben sich aus den Zeichnungen und der zugehörigen Beschreibung.

Zeichnung:

In der Zeichnung ist ein Ausführungsbeispiel der erfindungsgemäßen Vorrichtung zur optischen Distanzmessung dargestellt, welches in der nachfolgenden Beschreibung näher erläutert werden soll. Die Figuren der Zeichnung, deren Beschreibung sowie die auf die Erfindung gerichteten Ansprüche enthalten zahlreiche Merkmale in Kombination. Ein Fachmann wird diese Merkmale bzw. die darauf bezogenen Ansprüche auch einzeln betrachten und zu weiteren, sinnvollen Kombinationen und Ansprüchen zusammen fassen.

Es zeigen:

Figur 1:   Eine Vorrichtung zur optischen Distanzmessung in einer vereinfachten, schematisierten Gesamtübersicht.

Figur 2:   Eine Schaltungsanordnung zum Betrieb eines Messempfängers der erfindungsgemäßen Vorrichtung zur optischen Distanzmessung.

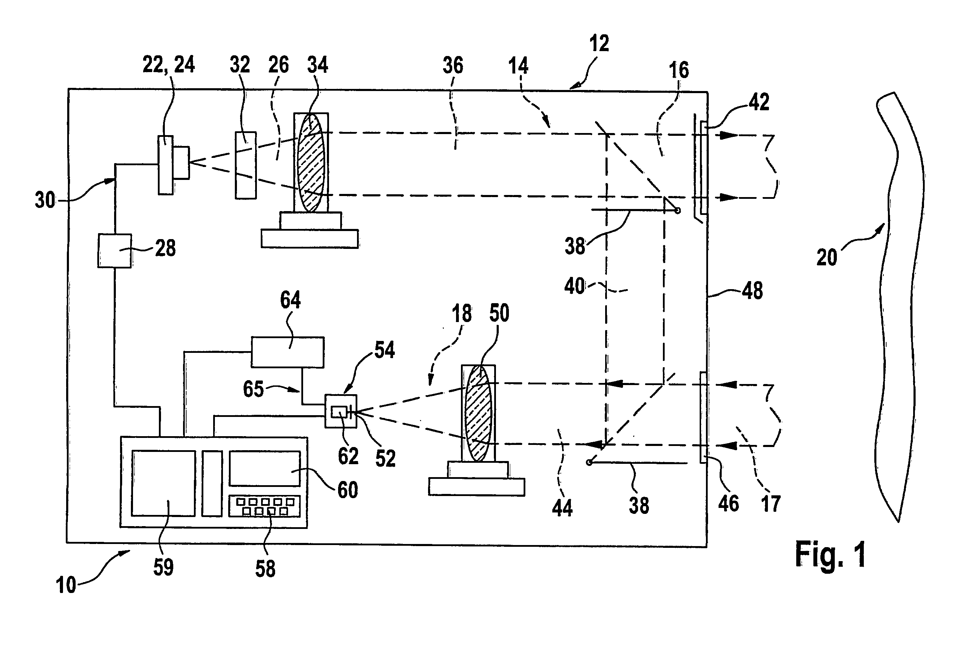

In Figur 1 ist in schematischer Weise ein optisches Entfernungsmessgerät 10 mit den wichtigsten Komponenten zur Beschreibung seines prinzipiellen Aufbaus dargestellt. Die Vorrichtung 10 zur Entfernungsmessung weist ein Gehäuse 12 auf, in dem ein Sendeast 14 zur Erzeugung eines optischen Messsignals 16 sowie ein Empfangsast 18 zur Detektion des von einem Zielobjekt 20 rücklaufenden Messsignals 17 ausgebildet sind.

Der Sendeast 14 weist insbesondere, neben einer Reihe von nicht weiter dargestellten Komponenten, eine Lichtquelle 22 auf, die im Ausführungsbeispiel der Figur 1 durch eine Halbleiter-Laserdiode 24 realisiert ist. Die Verwendung anderer Lichtquellen im Sendeast 14 der erfindungsgemäßen Vorrichtung ist ebenso möglich. Die Laserdiode 24 des Ausführungsbeispiels nach der Figur 1 sendet einen Laserstrahl in Form eines für das menschliche Auge sichtbaren Lichtbündels 26 aus. Dazu wird die Laserdiode 24 über ein Steuergerät 28 betrieben, welches durch eine entsprechende Elektronik eine Modulation des elektrischen Eingangssignals 30 auf die Diode 24 erzeugt. Das Steuergerät 28 wiederum erhält die benötigten Frequenzsignale zur Modulation der Laserdiode von einer Steuer- und Auswerteeinheit 58 des erfindungsgemäßen Messgerätes. In anderen Ausführungsbeispielen kann das Steuergerät 28 auch direkt integraler Bestandteil der Steuer- und Auswerteeinheit 58 sein.

Die Steuer- und Auswerteeinheit 58 umfasst eine Schaltungsanordnung 59, die unter anderem zumindest einen Quarzoszillator zur Bereitstellung der benötigten Frequenzsignale aufweist. Mit diesen Signalen, von denen typischerweise mehrere, mit unterschiedlichen Frequenzen während einer Entfernungsmessung genutzt werden, wird das optische Messsignal in bekannter Weise moduliert. Der prinzipielle Aufbau einer solchen Vorrichtung und das entsprechende Verfahren zur Erzeugung unterschiedlicher Messfrequenzen ist beispielsweise der DE 198 11 550 C2 zu entnehmen, so dass an dieser Stelle lediglich auf dieses Zitat verwiesen wird und der Inhalt der zitierten Schrift auch Inhalt dieser Anmeldung sein soll, im Rahmen der vorliegenden Beschreibung hierauf aber nicht näher eingegangen wird.

Das aus der Halbleiter-Diode 24 austretende, intensitätsmodulierte Lichtbündel 26 durchläuft eine erste Optik 32, die zu einer Verbesserung des Strahlprofils des Messstrahlbündels führt. Eine solche Optik ist heutzutage integraler Bestandteil einer Laserdiode. Das Messstrahlbündel 26 durchläuft anschließend ein Kollimationsobjektiv 34, welches ein nahezu paralleles Lichtstrahlenbündel 36 erzeugt, welches vom Gerät in Richtung auf ein zu vermessendes Zielobjekt 20 ausgesendet wird.

Im Sendeast 14 der erfindungsgemäßen Vorrichtung gemäß Figur 1 befindet sich zudem eine Vorrichtung 38 zur Erzeugung einer geräteinternen Referenzstrecke 40, mit der eine interne Kalibrierung des Messgerätes durchgeführt werden kann.

Das Messsignal 16 wird durch ein optisches Fenster 42 aus dem Gehäuse 12 der Vorrichtung 10 ausgekoppelt. Für den eigentlichen Messvorgang wird die Vorrichtung 10 auf das gewünschte Zielobjekt 20 ausgerichtet, dessen Entfernung zum Messgerät ermittelt werden soll. Durch Betätigung eines nicht weiter dargestellten Bedienelementes kann das optische Fenster 42 geöffnet werden, so dass das Messstrahlenbündel 36 auf das Zielobjekt 20 einfällt. Das an dem gewünschten Zielobjekt 20 reflektierte oder auch gestreute Signal 17 gelangt zu einem gewissen Teil durch ein Eintrittsfenster 46 wieder in das Gehäuse 12 der erfindungsgemäßen Vorrichtung 10. Die durch das Eintrittsfenster 46 in der Stirnseite 48 der Vorrichtung 10 eintreffende Messstrahlung bildet ein rücklaufendes Messstrahlenbündel 44, welches auf ein Empfangsobjektiv 50 gelenkt wird. Das Empfangsobjektiv 50 bündelt das rücklaufende Messstrahlenbündel 44 auf die aktive Fläche 52 einer Empfangseinrichtung 54.

Die Empfangseinrichtung 54 der erfindungsgemäßen Vorrichtung weist eine Foto-Diode 62 auf, die in bekannter Weise das einkommende Lichtsignal 17 in ein elektrisches Signal umwandelt, welches dann über entsprechende Verbindungsmittel 56 an eine Steuer- und Auswertereinheit 58 der Vorrichtung 10 weitergeleitet wird. Die Steuer- und Auswerteeinheit 58 ermittelt aus dem rücklaufenden optischen Signal 17 und insbesondere aus der dem rücklaufenden Signal ausgeprägten Phasenverschiebung im Vergleich zum ursprünglich ausgesendeten Signal 16 die gesuchte Distanz zwischen der Vorrichtung 10 und dem Zielobjekt 20. Die ermittelte Distanz kann beispielsweise in einer optischen Anzeigevorrichtung 60 dem Benutzer des Gerätes mitgeteilt werden.

Die das rücklaufende Messstrahlenbündel 44 detektierende Empfangseinrichtung 54 weist eine Avalanche-Foto-Diode 62 auf, die in der erfindungsgemäßen Vorrichtung gleichzeitig als Element zur Frequenztransponierung genutzt wird. Wird die Vorspannung einer solchen Fotodiode, durch die die Verstärkung des erzeugten elektrischen Signals bestimmt wird, moduliert, so findet sich diese Variation, wie bereits beschrieben, auch auf dem elektrischen Ausgangssignal der Diode wieder.

Fällt auf die aktive Fläche 52 der Avalanche-Diode optische Messstrahlung mit der Modulationsfrequenz $f_M$ ein und wird die Verstärkung der Diode durch Anlegen einer Wechselspannung $u_K(f_M + \Delta f)$ moduliert, so findet sich im elektrischen Ausgangssignal der Diode neben beispielsweise der Summenfrequenz dieser beiden Signale auch die Differenzfrequenz $\Delta f$ der beiden Modulationsfrequenzen. Diese an sich bekannte Tatsache wird dazu genutzt, das optische, hochfrequent modulierte Messsignal in den Bereich der Niederfrequenz (im Bereich bis zu einigen kHz) zu transformieren, so dass für die weitere Auswertung lediglich niederfrequente, leicht zu handhabende Signale zu verarbeiten sind. In der erfindungsgemäßen Vorrichtung wird die Avalanche-Foto-Diode derart als Mischerelement betrieben, dass neben einer hochfrequenten Modulation der Kathodenseite ($U_K = U_0 + u_K(t)$) zusätzlich auch die Anodenseite der Diode moduliert ($U_A = u_A(t)$) wird.

Dazu wird in der erfindungsgemäßen Vorrichtung, beispielsweise nach dem in der DE 198 11 550 C2 offenbarten Verfahren eine zur optischen Modulationsfrequenz $f_M$ dicht benachbarte Frequenz ($f_M + \Delta f$) erzeugt. Diese Frequenz ($f_M + \Delta f$ wird in einem Modulator 64 der Versorgungsspannung (Vorspannung) $U_0$ der Diode kathodenseitig aufmoduliert. Während bei bekannten Geräten nur die Kathodenspannung $U_K$ der Diode moduliert wird, ist in der erfindungsgemäßen Vorrichtung auch die Anodenspannung $U_A$ der Diode mit dem invertierten Signal $u_A(t) = -u_K(t)$ der modulierenden Kleinsignalspannung der Kathodenseite moduliert. Der Modulator 64 stellt über entsprechende Verbindungsleitungen 65 neben der modulierenden Kathodenspannung $u_K(t)$ auch die Anodenspannung $U_A = u_A(t)$ für die Diode zur Verfügung. Diese beiden Spannungen sollten möglichst entgegengesetzte Polarität und gleiche Amplitude besitzen.

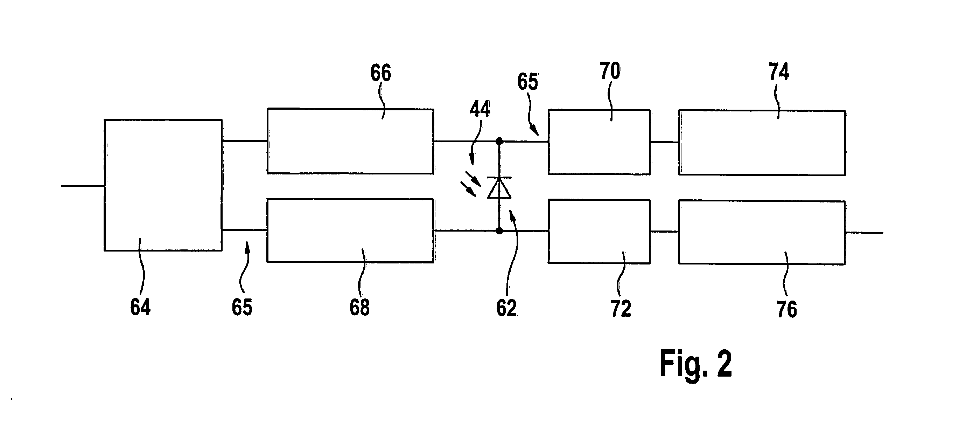

Figur 2 zeigt eine schematisierte Schaltungsanordnung zur erfindungsgemäßen Modulation des Messempfängers eines Entfernungsmessgerätes. Auf die Avalanche-Fotodiode 62 der Empfangseinrichtung 54 fällt die vom Zielobjekt reflektierte, bzw. gestreute Messstrahlung 44 ein und wird durch die Diode in ein elektrisches Signal transformiert. Erfindungsgemäß wird die Avälanche-Foto-Diode kathodenseitig mit einer Modulationsspannung $u_K = u_K(t)$ moduliert, während gleichzeitig die Anodenseite der Fotodiode mit einer betragsmäßig möglichst gleichen, in ihrer Polarität aber invertierten Modulationsspannung $u_A = u_A(t) = -u_K(t)$ moduliert wird. Zwischen dem, die modulierende Kathodenspannung $u_K(t)$ sowie die Anodenspannung $u_A(t)$ zur Verfügung stellenden Modulator 64 und der Fotodiode 62 ist im Ausführungsbeispiel der Figur 2 jeweils ein Anpassnetzwerk 66 bzw. 68 vorgesehen. Diese Anpassnetzwerke 66 und 68 sind optional und können ggf. erforderlich sein, um akzeptable Amplituden für die Modulationsspannungen $u_K$ bzw. $u_A$ im Bereich der notwendigen hohen Frequenzen zu erzielen bzw. um parasitäre Störeffekte auf den Modulationsspannungen zu kompensieren.

In vorteilhafter Weise liefert der Modulator 64 beide Modulationsspannungen. Dazu können zwei betragsmäßig gleichartige Signale mit einer Phasenverschiebung von 180° erzeugt werden und auf die entsprechenden Elektroden der Diode gegeben werden.

Auf der Ausgangssignalseite der erfindungsgemäßen Fotodiode 62 befinden sich in der Empfangseinrichtung 54 Tiefpässe 70 bzw. 72. Die Tiefpässe 70 und 72 blockieren die hochfrequenten Signalanteile, insbesondere die hochfrequente Modulationsfrequenz für die Verstärkung der Diode sowie das dem optischen Signal entsprechenden elektrischen Ausgangssignal der Diode und ermöglichen es so, dass lediglich das niederfrequente Mischsignal der weiteren Auswertung zugeführt werden kann. Die Tiefpässe 70 bzw. 72 sollten dabei möglichst kleine Impedanzverläufe für die Arbeitsfrequenz aufweisen. In einem sehr einfachen Ausführungsbeispiel können diese Tiefpässe durch einen Widerstand und einen Kondensator realisiert werden.

Ferner weist die erfindungsgemäße Empfangseinrichtung 54 eine Gleichstromspannungsquelle 74 auf, die als DC-Sperrspannungsquelle zur Festlegung bzw. Einregelung des Arbeitspunktes der Fotodiode genutzt wird. Die DC-Sperrspannungsquelle liefert die über der Diode anliegende Spannungsdifferenz $U_0$ mit der die Photodiode in Sperrrichtung vorgespannt ist. Diesem DC-Signal werden sowohl kathodenseitig als auch anodenseitig die modulierenden Kleinsignalspannungen $u_K(t)$ bzw. $u_A(t)$ überlagert.

Das niederfrequente Mischsignal (Mischprodukt aus elektrischer Modulationsfrequenz an den Elektroden der Fotodiode und der Frequenz der Modulation des optischen Messsignals) wird einem Verstärkerelement 76 zugeführt, welches das die Phaseninformation tragende Mischsignal vor der weiteren Auswertung in gewünschter Weise verstärkt. Die einzelnen Bauelemente der Vorrichtung sind in entsprechender Weise über elektrische Verbindungsleitungen (65) miteinander verbunden.

Die Amplitude des Mischsignals vor der Verstärkung ist im Wesentlichen bestimmt durch die Amplitude des einfallenden optischen Signals sowie durch die Verstärkung in der Fotodiode. Für das Mischen in der Diode ist im Wesentlichen das zeitabhängige Differenzsignal $U_D(t)$ zwischen Kathodenspannung $U_K$ und Anodenspannung $U_A$ verantwortlich. Das Mischsignal der Diode, welches proportional zu $U_D(t)$ ist, ergibt sich für die erfindungsgemäße Vorrichtung demnach zu:

$$U_D(t) = U_A(t) - U_K(t) \;=\; u_A(t) - u_K(t) \approx 2\,u_A(t) = -\,2\,u_K(t)$$

Mit der erfindungsgemäßen Modulation sowohl der Kathoden- als auch der AnodenSeite der frequenzmischenden Avalanche-Diode benötigt man demnach nur die halbe Modulationsamplitude gegenüber einer reinen Kathodenmodulation. Dies ist insbesondere im Bereich höherer und höchster Messfrequenzen des optischen Signals von Vorteil. Da die Modulationsfrequenz der Verstärkung der Fotodiode möglichst nahe bei der (hohen) Modulationsfrequenz des optischen Messsignals liegen sollte, benötigt ein solches System entsprechend hohe Leistung für die elektronischen Frequenztreiber. Mit der erfindungsgemäßen Vorrichtung ist es daher möglich, aufgrund der reduzierten Anforderungen an die notwendige Modulationsamplitude auch die Treiberleistung entsprechend zu senken.

Darüber hinaus verringert sich ebenfalls, die einen Verlustmechanismus darstellende Abstrahlung des Detektionssystems auf ¼ des Wertes, der sich bei einer herkömmlichen Modulation lediglich der Kathodenseite einstellt. Die Empfangseinrichtung, die mit hinreichender Genauigkeit eine elektrisch kurze Antenne darstellt, besitzt eine Abstrahlung, die quadratisch mit der Amplitude der Modulation steigt, so dass durch die Halbierung der Modulationsamplitude eine deutliche Reduzierung der Abstrahlung ermöglicht wird.

Gleichtaktstörungen, die in gleicher Weise im Anoden-, wie auch im Kathodenpfad auftreten, werden bei dem erfindungsgemäßen Verfahren nicht mehr mitgemischt und können somit auch keine Messwertverfälschung nach sich ziehen. Dazu ist es erforderlich, dass die modulierende Kathodenspannung $u_K(t)$ sowie die Anodenspannung $u_A(t)$ möglichst exakt entgegengesetzte Polarität und gleiche Amplituden besitzen. Je besser diese Bedingung erfüllt ist, desto besser funktioniert die Schaltung und desto sauberer lassen sich Geichtaktstörungen des Messsystems eliminieren.

Mit dem erfindungsgemäßen Verfahren bzw. der erfindungsgemäßen Vorrichtung zur Durchführung dieses Verfahrens ist es möglich, die Mischeffizienz bei der Frequenztransformation in den niederfrequenten Bereich auch bei höheren Modulationsfrequenzen zu gewährleisten. Damit ist die Verwendung höherer Modulationsfrequenzen für das optische Messsignal und damit einhergehend eine höhere Messgenauigkeit für ein Entfernungsrizessgerät möglich. Darüber hinaus ermöglicht das erfindungsgemäße Verfahren, die vom zugehörigen Messgerät emittierte Störstrählung zu verringern und Störeinflüsse auf die Empfangseinheit des Messgerätes besser zu unterdrücken.

Das erfindungsgemäße Verfahren sowie die erfindungsgemäße Vorrichtung zur Durchführung dieses Verfahrens sind nicht auf das in den Zeichnungen beschriebene Ausführungsbeispiel beschränkt.

**Patentansprüche**

1. Verfahren zur optischen Distanzmessung, bei dem zumindest eine Sendeeinheit eines Sendeastes (14) eines Messgerätes (10) modulierte Messstrahlung (16,36) in Richtung auf ein Zielobjekt (20) aussendet, und die vom Zielobjekt (20) rücklaufenden Messstrahlung (17,44) im Messgerät (10) von mindestens einer, in einem Empfangsast (18) des Gerätes (10) vorhandenen Messdiode (62) detektiert wird und einer Steuer- und Auswerteeinheit (58) des Messgerätes zugeführt wird, wobei die mindestens eine Messdiode (62) des Empfangsastes (18) auch als frequenzmischendes Bauelement zur Transformation eines auszuwertenden Messsignales genutzt wird, **dadurch gekennzeichnet, dass** neben der kathodenseitigen Spannung $U_K$ ($U_K = U_0 + u_K(t)$ ) der Messdiode (62) auch eine anodenseitige Spannung $U_A$ der Messdiode (62) moduliert wird ( $U_A = U_A(t)$ ).

2. Verfahren zur optischen Distanzmessung nach Anspruch 1, **dadurch gekennzeichnet, dass** die Anodenspannung $U_A$ mit der invertierten, modulierenden Kathodenspannung ($-u_K(t)$) moduliert wird ( $U_A = u_A(t) = -u_K(t)$ ).

3. Verfahren zur optischen Distanzmessung nach Anspruch 1 öder 2, **dadurch gekennzeichnet, dass** die modulierende Kathodenspannung $u_K(t)$ und die modulierende Anodenspannung $u_A(t)$ von einem gemeinsamen Modulator (64) generiert werden.

4. Vorrichtung zur optischen Distanzmessung, mit zumindest einem Sendeast (14) mit mindestens einem Sender (22,24) zur Aussendung modulierter Messstrahlung (16,36) in Richtung auf ein Zielobjekt (20), und mit mindestens einem Empfangsast (18) mit zumindest einem Messempfänger (54) zum Empfang der vom Zielobjekt (20) rücklaufenden Messstrahlung (17,44), wobei der Messempfänger (54) mit einer als Frequenzmischerelement dienenden Photodiode (62) versehen ist, sowie mit einer Steuer - und Auswerteeinheit (58) zur Ermittlung der Distanz der Vorrichtung (10) zum Zielobjekt (20), **dadurch gekennzeichnet, dass** eine an der Diode (62) anliegende Diodenvorspannung sowohl kathodenseitig, als auch anodenseitig moduliert ist.

5. Vorrichtung nach Anspruch 4, **dadurch gekennzeichnet, dass** die, die Anodenseite modulierende Anodenspannung $u_A(t)$ im Wesentlichen gleich der invertierten, die Kathodenseite der Diode modulierenden Kathodenspannung $u_K(t)$ ist ( $u_A(t) = -u_K(t)$ ).

6. Vorrichtung nach Anspruch 4 oder 5, **dadurch gekennzeichnet, dass** die Vorrichtung einen Modulator (64) aufweist, mit dessen Hilfe sowohl die modulierende Kathodenspannung $u_K$, als auch die modulierende Anodenvorspannung $u_A$ generierbar sind.

7. Vorrichtung nach Anspruch 6, **dadurch gekennzeichnet, dass** zwischen dem Modulator (64) zur Erzeugung der modulierenden Kathoden- beziehungsweise Anodenspannung und der als Mischerelement genutzten Diode (62) elektrische Verbindungsmittel (65) vorgesehen sind, die zumindest ein Anpassnetzwerk (66,68) aufweisen.

8. Vorrichtung nach einem der Ansprüche 4 bis 7, **dadurch gekennzeichnet, dass** die Photodiode (62) eine Avalanche-Photodiode ist.


**Claims**

1. Method for optical distance measurement, in which at least one transmitting unit of a transmitting branch (14) of a measuring instrument (10) emits modulated measuring radiation (16, 36) in the direction of a target object (20), and the measuring radiation (17, 44) returning from the target object (20) is detected in the measuring instrument (10) by at least one measurement diode (62) in a receiving branch (18) of the instrument (10), and fed to a control and evaluation unit (58) of the measuring instrument, the at least one measurement diode (62) of the receiving branch (18) also being used as frequency-mixing component to transform a measurement signal to be evaluated, **characterized in that** in addition to the cathode-side voltage $U_K$ ($U_K = U_0 + u_K(t)$) of the measurement diode (62) an anode-side voltage $U_A$ of the measurement diode (62) is also modulated ($U_A = u_A(t)$ ).

2. Method for optical distance measurement according to Claim 1, **characterized in that** the anode voltage $U_A$ is modulated ($U_A = u_A(t) = -u_K(t)$ ) with the inverted, modulating cathode voltage ($-u_K(t)$ ).

3. Method for optical distance measurement according to Claim 1 or 2, **characterized in that** the modulating cathode voltage $u_K(t)$ and the modulating anode voltage $u_A(t)$ are generated by a common modulator (64).

**EP 1 529 194 B1**

4. Device for optical distance measurement, having at least one transmitting branch (14) with at least one transmitter (22, 24) for emitting modulated measurement radiation (16, 36) in the direction of a target object (20), and having at least one receiving branch (18) with at least one measurement receiver (54) for receiving the measuring radiation (17, 44) returning from the target object (20), the measurement receiver (54) being provided with a photodiode (62) serving as frequency mixer element, and having a control and evaluation unit (58) for determining the distance of the device (10) from the target object (20), **characterized in that** a diode bias voltage applied to the diode (62) is modulated both on the cathode side and on the anode side.

5. Device according to Claim 4, **characterized in that** the anode voltage $u_A(t)$ modulating the anode side is substantially equal to the inverted cathode voltage $u_K(t)$, which modulates the cathode side of the diode ($u_A(t) = -u_K(t)$).

6. Device according to Claim 4 or 5, **characterized in that** the device has a modulator (64), with the aid of which both the modulating cathode voltage $u_K$ and also the modulating anode bias voltage $u_A$ can be generated.

7. Device according to Claim 6, **characterized in that** electrical connecting means (65) which have at least one matching network (66, 68) are provided between the modulator (64) for generating the modulating cathode voltage or anode voltage and the diode (62) used as mixer element.

8. Device according to one of Claims 4 to 7, **characterized in that** the photodiode (62) is an Avalanche photodiode.

**Revendications**

1. Procédé de mesure optique de distance, selon lequel au moins une unité d'émission d'une branche d'émission (14) d'un appareil de mesure (10) émet un rayonnement de mesure (16, 36) modulé en direction d'un objet cible (20) et le rayonnement de mesure (17, 44) renvoyé par l'objet cible (20) est détecté dans l'appareil de mesure (10) par au moins une diode de mesure (62) présente dans une branche de réception (18) de l'appareil (10) et acheminé à une unité de commande et d'interprétation (58) de l'appareil de mesure, l'au moins une diode de mesure (62) de la branche de réception (18) étant également utilisée comme composant mélangeur de fréquence pour la transformation d'un signal de mesure à interpréter, **caractérisé en ce qu'**en plus de la tension de cathode $U_K$ ($U_K = U_0 + u_K(t)$) de la diode de mesure (62), une tension d'anode $U_A$ de la diode de mesure (62) est également modulée ($U_A = u_A(t)$).

2. Procédé de mesure optique de distance selon la revendication 1, **caractérisé en ce que** la tension d'anode $U_A$ est modulée avec la tension de cathode modulée inverse ($-u_K(t)$) ($U_A = U_A(t) = -u_K(t)$).

3. Procédé de mesure optique de distance selon la revendication 1 ou 2, **caractérisé en ce que** la tension de cathode modulée $u_K(t)$ et la tension d'anode modulée $u_A(t)$ sont générées par un modulateur (64) commun.

4. Dispositif de mesure optique de distance, comprenant au moins une branche d'émission (14) incluant au moins un émetteur (22, 24) pour émettre un rayonnement de mesure (16, 36) modulé en direction d'un objet cible (20), et comprenant au moins une branche de réception (18) incluant au moins un récepteur de mesure (54) pour recevoir le rayonnement de mesure (17, 44) renvoyé par l'objet cible (20), le récepteur de mesure (54) étant muni d'une photodiode (62) faisant office de composant mélangeur de fréquence ainsi que d'une unité de commande et d'interprétation (58) pour déterminer la distance entre le dispositif (10) et l'objet cible (20), **caractérisé en ce qu'**une tension de polarisation de diode appliquée à la diode (62) est modulée à la fois du côté de la cathode et du côté de l'anode.

5. Dispositif selon la revendication 4, **caractérisé en ce que** la tension d'anode modulée $u_A(t)$ du côté de l'anode est pour l'essentiel égale à la tension de cathode modulée inverse $u_K(t)$ ($u_A(t) = -u_K(t)$) du côté cathode de la diode.

6. Dispositif selon la revendication 4 ou 5, **caractérisé en ce que** le dispositif présente un modulateur (64) à l'aide duquel peuvent être générées à la fois la tension de cathode modulée $u_K$ et la tension de polarisation d'anode modulée $u_A$.

7. Dispositif selon la revendication 6, **caractérisé en ce qu'**entre le modulateur (64) destiné à générer la tension de cathode ou d'anode modulée et la diode (62) utilisée comme élément mélangeur sont prévus des moyens de liaison électriques (65) qui présentent au moins un réseau d'adaptation (66, 68).

**8.** Dispositif selon l'une des revendications 4 à 7, **caractérisé en ce que** la photodiode (62) est une photodiode à avalanche.

Fig. 1

Fig. 2

**IN DER BESCHREIBUNG AUFGEFÜHRTE DOKUMENTE**

**In der Beschreibung aufgeführte Patentdokumente**

- DE 4303804 A1
- DE 3743678 A1
- EP 0932835 B1
- DE 19811550 A1
- US 5455670 A
- DE 19811550 C2